# EUROPEAN PATENT APPLICATION

(11) **EP 4 697 489 A1**
(43) Date of publication of application: **18.02.2026**
(21) Application number: 25176160.7
(22) Date of filing: 13.05.2025
(51) Int. Cl.: H01M 50/553, H01M 50/548, H01M 50/528, H01M 50/531, H01M 50/538, H01M 50/533, H01M 10/0525

(54) **SUB PLATE AND SECONDARY BATTERY INCLUDING SAME**

(30) Priority: 12.08.2024 KR 20240107743
(71) Applicant: SAMSUNG SDI CO., LTD., Yongin-si, Gyeonggi-do 17084 (KR)
(72) Inventor: CHEON, Bohyun, 17084 Yongin-si (KR); JANG, Seongyong, 17084 Yongin-si (KR)
(74) Representative: Marks & Clerk LLP

(57) **Abstract**

A sub plate includes a first flat portion connectable to a current collector, a second flat portion having a step height difference with respect to the first flat portion, the second flat portion being connectable to an electrode assembly, and a first elastic portion connecting the first flat portion and the second flat portion, the first elastic portion having elasticity.

## Description

### BACKGROUND

### 1. Field

Aspects of embodiments of the present disclosure relate to a sub plate and a secondary battery including the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage).

Secondary batteries may be classified into cylindrical type secondary batteries, prismatic type secondary batteries, pouch type secondary batteries, etc., depending on a shape of a case. A prismatic type secondary battery has a structure in which an electrode assembly is embedded in a prismatic metal can. The electrode assembly is connected to a sub plate assembly and inserted into the prismatic metal can. A cap assembly is connected to the sub plate assembly and welded to a can to seal the can.

Prismatic type secondary batteries may be classified into a bent type structure in which a sub plate and a current collector are connected through a bent current collection tab, and a direct-connected type structure in which a sub plate and a current collector are directly connected. In a case where a secondary battery receives external impact, the bent current collection tab in the bent type structure acts as a buffer, but the direct-connected type structure no structure that buffers external impact.

The above information disclosed in this Background section is for enhancement of understanding of the background of the present disclosure, and therefore, it may contain information that does not constitute related (or prior) art.

### SUMMARY

According to an embodiment of the present disclosure, a sub plate may include a first flat portion connected to a current collector, a second flat portion configured to have a step with respect to the first flat portion and connected to an electrode assembly, and a first elastic portion configured to connect the first flat portion and the second flat portion and having elasticity.

According to one or more embodiments, the first elastic portion may extend to be bent from one end of the first flat portion to one end of the second flat portion.

According to one or more embodiments, the first elastic portion may be bent in an inward direction of the first flat portion.

According to one or more embodiments, the first elastic portion may be bent multiple times alternately in inward and outward directions of the first flat portion.

According to one or more embodiments, the first elastic portion may be bent curvedly in an inward direction of the first flat portion.

According to one or more embodiments, the sub plate may further include a second elastic portion configured to have elasticity and extend to be bent from one end of the second flat portion in a direction in which an insulating member may be disposed.

According to one or more embodiments, the second elastic portion may be bent in an inward direction of the second flat portion.

According to one or more embodiments, the second elastic portion may be bent multiple times alternately in inward and outward directions of the second flat portion.

According to one or more embodiments, the second elastic portion may be bent curvedly in an outward direction of the second flat portion.

According to one or more embodiments, the second elastic portion may be bent curvedly in an inward direction of the second flat portion.

According to one or more embodiments, the first elastic portion may be bent multiple times alternately in inward and outward directions of the first flat portion, and the second elastic portion may be bent multiple times alternately in inward and outward directions of the second flat portion.

According to one or more embodiments, the first elastic portion may be bent curvedly in an inward direction of the first flat portion, and the second elastic portion may be bent curvedly in an outward direction of the second flat portion.

According to one or more embodiments of the present disclosure, a secondary battery may include an electrode assembly, a case configured to accommodate the electrode assembly, a sub plate assembly including a sub plate connected to the electrode assembly and a current collector connected to the sub plate, a cap assembly connected to the sub plate assembly and joined to an opening of the case, and an insulating member disposed between the sub plate assembly and the cap assembly. The sub plate may include a first flat portion connected to a current collector, a second flat portion configured to have a step with respect to the first flat portion and connected to the electrode assembly, and a first elastic portion configured to connect the first flat portion and the second flat portion and have elasticity.

According to one or more embodiments, the first elastic portion may extend to be bent from one end of the first flat portion to one end of the second flat portion.

According to one or more embodiments, the secondary battery may further include a second elastic portion configured to have elasticity and extend to be bent from one end of the second flat portion in a direction in which the insulating member may be disposed.

According to one or more embodiments, the insulating member may include an elastic material.

According to one or more embodiments, the insulating member may have elasticity by being bent multiple times in inward and outward directions on opposite side surfaces.

According to one or more embodiments, the current collector may include a bottom portion connected to the first flat portion, and a protrusion portion configured to protrude on the bottom portion.

According to one or more embodiments, the cap assembly may include a cap plate configured to cover the opening of the case, a terminal plate connected to the current collector, and a sealing member configured to seal between the cap plate and the terminal plate.

According to one or more embodiments of the present disclosure, a secondary battery may include an electrode assembly, a case configured to accommodate the electrode assembly, the case including a first opening and a second opening facing the first opening, a first sub plate assembly including a first sub plate connected to one side of the electrode assembly and a first current collector connected to the first sub plate, a second sub plate assembly including a second sub plate connected to the other side of the electrode assembly and a second current collector connected to the second sub plate, a first cap assembly configured to cover the first opening and connected to the first sub plate assembly, a second cap assembly configured to cover the second opening and connected to the second sub plate assembly, a first insulating member disposed between the first sub plate assembly and the first cap assembly, and a second insulating member disposed between the second sub plate assembly and the second cap assembly. The first sub plate may include a first flat portion connected to a current collector, a second flat portion configured to have a step with respect to the first flat portion and connected to the electrode assembly, and a first elastic portion configured to connect the first flat portion and the second flat portion and having elasticity.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates a perspective view of a secondary battery according to an embodiment of the present disclosure.
FIG. 2 illustrates a cross-sectional view of the secondary battery according to an embodiment of the present disclosure.
FIG. 3 illustrates an enlarged view showing a region R1 of FIG. 2.
FIG. 4 illustrates a state in which the first sub plate assembly and the first cap assembly of FIG. 3 are separated from each other.
FIG. 5 illustrates a perspective view showing a state in which the first sub plate assembly, the first cap assembly, and the first insulating member of FIG. 3 are separated from each other.
FIG. 6 illustrates an enlarged view showing a region R2 of FIG. 2.
FIG. 7 illustrates a state in which a second sub plate assembly and a second cap assembly of FIG. 6 are separated from each other.
FIG. 8 illustrates a perspective view showing a state in which the second sub plate assembly, the second cap assembly, and the second insulating member of FIG. 6 are separated from each other.
FIG. 9 illustrates a diagram showing a comparative example of a first sub plate, a first current collector, and a first insulating member.
FIGS. 10 to 19 illustrate a first sub plate, a first current collector, and a first insulating member according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical scope, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

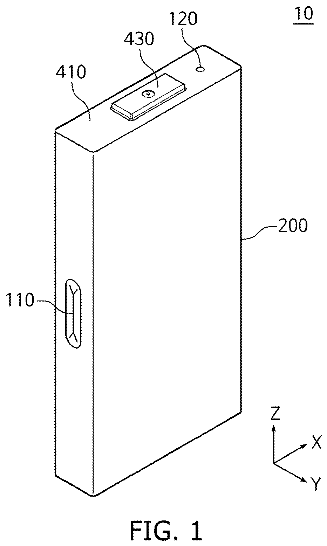

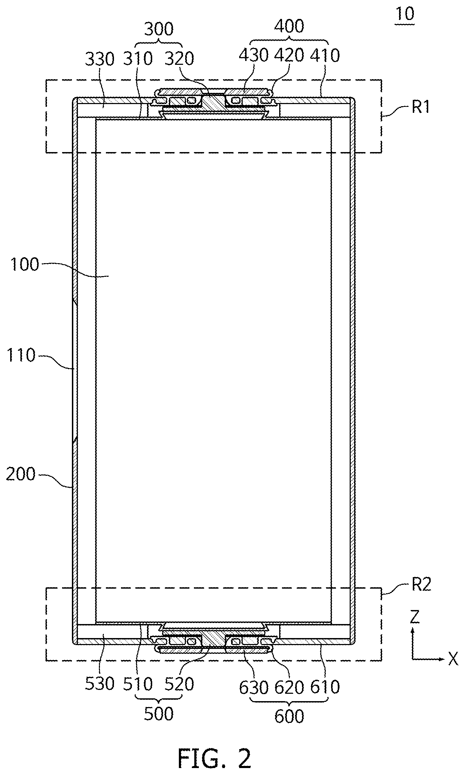

FIG. 1 illustrates a perspective view of a secondary battery 10 according to an embodiment of the present disclosure. FIG. 2 illustrates a cross-sectional view of the secondary battery 10 according to an embodiment of the present disclosure.

Referring to FIGS. 1 and 2, a secondary battery 10 may include an electrode assembly 100, a case 200 accommodating the electrode assembly 100, a first sub plate assembly 300, a first insulating member 330, a second sub plate assembly 500, a second insulating member 530, a first cap assembly 400, and a second cap assembly 600.

The first sub plate assembly 300 may be joined to one side of the electrode assembly 100 and may be electrically connected to a first electrode (e.g., a positive electrode) of the electrode assembly 100. The first sub plate assembly 300 may include a first sub plate 310 and a first current collector 320.

The first cap assembly 400 may be connected to the first sub plate assembly 300. The first insulating member 330 may be disposed between the first sub plate assembly 300 and the first cap assembly 400.

The second sub plate assembly 500 may be joined to the other side of the electrode assembly 100 and may be electrically connected to a second electrode (e.g., a negative electrode) of the electrode assembly 100. The second sub plate assembly 500 may include a second sub plate 510 and a second current collector 520.

The second cap assembly 600 may be connected to the second sub plate assembly 500. The second insulating member 530 may be disposed between the second sub plate assembly 500 and the second cap assembly 600.

The electrode assembly 100 may be accommodated in the case 200. The electrode assembly 100 may be formed by winding or stacking a stack of a first electrode, a separator, and a second electrode, which are formed in a thin plate or film shape. In a case where the electrode assembly 100 is a wound stack, the winding axis may be parallel to the longitudinal direction of the case 200. As another example, the electrode assembly 100 may be a stack type rather than a wound type. In the present disclosure, the shape of the electrode assembly 100 is not limited. As another example, the electrode assembly 100 may be a Z-stack electrode assembly 100 in which the first electrode and the second electrode are inserted on opposite sides of the separator bent in a Z-stack. The electrode assembly 100 may be accommodated in the case 200 by stacking one or more electrode assemblies 100 so that long sides thereof are adjacent to each other. In the electrode assembly 100, the first electrode may serve as a positive electrode and the second electrode may serve as a negative electrode, e.g., the opposite may also be possible.

The first electrode may be formed by applying a first electrode active material, such as a transition metal oxide, to a first electrode current collector plate formed of a metal foil, such as aluminum or an aluminum alloy, and may include a first electrode tab (or a first uncoated portion), which is a region where the first electrode active material is not applied. The first electrode tab may be a passage for current flow between the first electrode and the first sub plate assembly 300. In some examples, the first electrode tab may be formed by cutting the first electrode to protrude toward the other side in advance in a case of manufacturing the first electrode, and may further protrude toward the other side than the separator without separate cutting.

The second electrode may be formed by applying a second electrode active material, such as graphite or carbon, to a second electrode current collector plate formed of a metal foil, such as copper, a copper alloy, nickel, or a nickel alloy, and may include a second electrode tab (or a second uncoated portion), which is a region where the second electrode active material is not applied. The second electrode tab may be a passage for current flow between the second electrode and the second sub plate assembly 500. In some examples, the second electrode tab may be formed by cutting the second electrode to protrude toward the other side in advance in a case of manufacturing the second electrode, and may further protrude toward one side than the separator without separate cutting.

In some examples, the first electrode tab may be located on the upper side of the electrode assembly 100 and the second electrode tab may be located on the lower side of the electrode assembly 100. The upper side and the lower side are for convenience of explanation based on the secondary battery 10 illustrated in FIG. 2, and the positions thereof may change in a case where the secondary battery 10 rotates left and right or up and down.

An electrolyte injection port 120 may be formed on the first cap plate 410. An electrolyte may be injected into the case 200 through the electrolyte injection port 120. In FIG. 1, the electrolyte injection port 120 is illustrated as being formed on the first cap plate 410, but the present disclosure may be varied. After the injection of the electrolyte is completed, the electrolyte injection port 120 may be sealed using a sealing means such as a stopper.

A vent portion 110 may be formed on one surface of the case 200. For example, the vent portion 110 may be formed on one side surface of the case 200. One side surface may refer to one side surface of the case 200 in a direction opposite to the X-axis direction. The vent portion 110 may prevent an explosion of the secondary battery 10 or prevent a chain exothermic reaction of the secondary battery 10 arranged close to the secondary battery 10. For example, the vent portion 110 may be configured to be opened in a case where the internal pressure of the secondary battery 10 exceeds a certain threshold pressure. The threshold pressure may be set differently depending on the application field, material, purpose, etc. of the secondary battery 10. As another example, the vent portion 110 may be configured to be opened in a case where the internal temperature exceeds a certain threshold temperature.

For example, referring to FIG. 1, one vent portion 110 may be formed in the center of one side surface of the case 200. In another example, any number of vent portions 110 may be formed at any position on one side surface of the case 200, e.g., two or more vent portions 110 may be formed on one surface of the case 200.

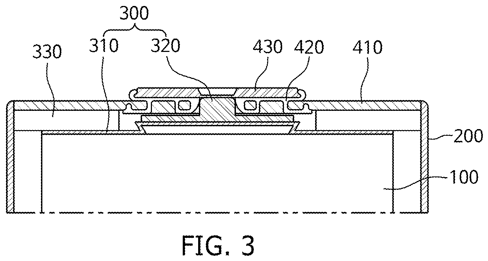

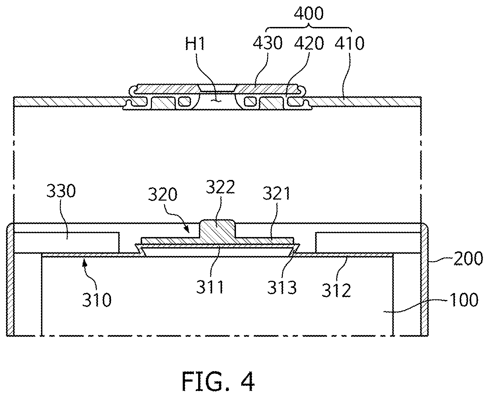

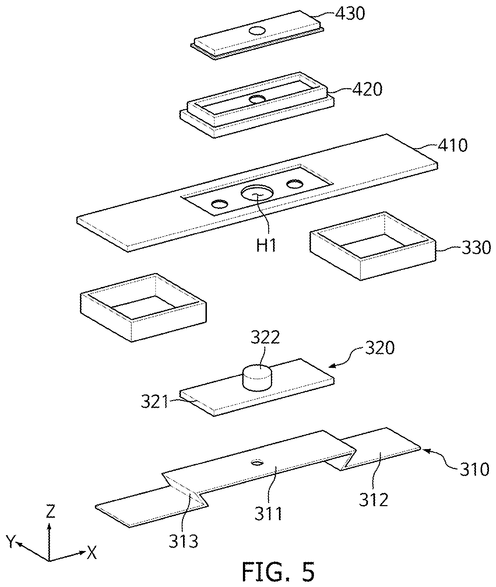

FIG. 3 illustrates an enlarged view showing a region R1 of FIG. 2. FIG. 4 illustrates a state in which the first sub plate assembly 300 and the first cap assembly 400 of FIG. 3 are separated from each other. FIG. 5 illustrates a perspective view showing a state in which the first sub plate assembly 300, the first cap assembly 400, and the first insulating member 330 of FIG. 3 are separated from each other.

Referring to FIG. 3, the first sub plate assembly 300 and the first cap assembly 400 may be joined on one side of the electrode assembly 100. The first insulating member 330 may be disposed between the first sub plate assembly 300 and the first cap assembly 400.

The first sub plate assembly 300 may be joined to one side of the electrode assembly 100 and may be electrically connected to a first electrode (e.g., a positive electrode) of the electrode assembly 100. The first sub plate assembly 300 may include the first sub plate 310 and the first current collector 320.

The first sub plate 310 may be joined to the first electrode tab of the electrode assembly 100. For example, the first electrode tab may be welded to the first sub plate 310. The first sub plate 310 may be connected to the first electrode tab and electrically connected to the first electrode.

The first current collector 320 may be joined to the first sub plate 310. For example, the first current collector 320 and the first sub plate 310 may be welded together. The first current collector 320 may be electrically connected to the first sub plate 310.

The first current collector 320 may be connected to the first cap assembly 400. For example, the first current collector 320 may be welded to a first terminal plate 430 of the first cap assembly 400.

The first insulating member 330 may be disposed between the first sub plate assembly 300 and the first cap assembly 400, e.g., the first insulating member 330 may be in direct contact with both the first sub plate 310 of the first sub plate assembly 300 and the first cap plate 410 of the first cap assembly 400. The first insulating member 330 may prevent the first sub plate 310 and the first cap plate 410 from coming into contact with each other.

The first insulating member 330 may have elasticity. For example, in a case where the secondary battery 10 receives external impact, the first insulating member 330 may exhibit elasticity and alleviate (e.g., absorb) impact. The first insulating member 330 may alleviate impact, thereby maintaining the welded connection state between a first flat portion 311 of the first sub plate 310 and the first current collector 320 and the welded connection state between a second flat portion 312 of the first sub plate 310 and the electrode assembly 100. In some embodiments, the first insulating member 330 may alleviate impact and prevent the electrode assembly 100 from being damaged.

Referring to FIGS. 4 and 5, the first sub plate 310 may include the first flat portion 311, the second flat portion 312, and a first elastic portion 313. For example, the first elastic portion 313 may extend between the first flat portion 311 and the second flat portion 312.

The first current collector 320 may be connected (e.g., connectable) to the first flat portion 311. For example, a first bottom portion 321 of the first current collector 320 may be welded to the upper surface of the first flat portion 311.

The second flat portion 312 may have a step height difference with respect to the first flat portion 311 and may extend in parallel to the first flat portion 311 from opposite sides of the first flat portion 311. For example, referring to FIGS. 2 and 5, the second flat portion 312 may be at a higher level than the first flat portion 311, relative to the second sub plate assembly 500.

The second flat portion 312 may have a structure that is symmetrical on opposite sides from the center of the first flat portion 311 (e.g., opposite sides along the X-axis direction). For example, the second flat portion 312 may have a step downward from the first flat portion 311 and may extend parallel to opposite sides of the first flat portion 311. The electrode assembly 100 may be connected to one surface (e.g., a first surface) of the second flat portion 312, and the first insulating member 330 may be disposed on the other surface (e.g., a second surface) of the second flat portion 312 facing one surface of the second flat portion 312, e.g., the electrode assembly 100 and the first insulating member 330 may be connected (e.g., directly connected) to opposite surfaces of the second flat portion 312. For example, the first electrode tab may be welded to the lower surface of the second flat portion 312, and the first insulating member 330 may be disposed on the upper surface of the second flat portion 312.

The first elastic portion 313 may connect the first flat portion 311 and the second flat portion 312, e.g., the first elastic portion 313 may extend at an oblique angle (e.g., a sharp angle) with respect to each of the first flat portion 311 and the second flat portion 312. The first elastic portion 313 may have a structure that is symmetrical on opposite sides from the center of the first flat portion 311 (e.g., opposite sides along the X-axis direction). For example, the first elastic portion 313 may extend downward from one end of the first flat portion 311 toward the second flat portion 312, and may be connected to the first flat portion 311 and the second flat portion 312. For example, the first elastic portion 313 may extend downward from the other end of the first flat portion 311 toward the second flat portion 312, and may be connected to the first flat portion 311 and the second flat portion 312.

References to "upper" and "lower" sides are for convenience of explanation based on the secondary battery 10 illustrated in FIG. 4, and the positions thereof may change in a case where the secondary battery 10 rotates left and right or up and down.

Referring to FIGS. 4-5, the first elastic portion 313 may have elasticity. For example, in a case where the secondary battery 10 receives an external impact, the first elastic portion 313 may alleviate impact by moving linearly or twisting between the first flat portion 311 and the second flat portion 312. The first elastic portion 313 may alleviate impact, thereby maintaining the welded connection state between the first flat portion 311 and the first current collector 320 and the welded connection state between the second flat portion 312 and the electrode assembly 100. In some embodiments, the first elastic portion 313 may alleviate impact and prevent the electrode assembly 100 from being damaged.

The first current collector 320 may include the first bottom portion 321 and a first protrusion portion 322. The first bottom portion 321 may be welded to the first flat portion 311. The first protrusion portion 322 may protrude on the first bottom portion 321, e.g., the first protrusion portion 322 may protrude from the first bottom portion 321 in a direction oriented away from the electrode assembly 100. For example, the first protrusion portion 322 may be formed in a cylindrical shape. The first protrusion portion 322 may be inserted into a first through hole H1 formed in the first cap plate 410 and connected to the first terminal plate 430.

The first cap assembly 400 may include the first cap plate 410, the first sealing member 420, and the first terminal plate 430.

The first cap plate 410 may be welded to the case 200. The first cap plate 410 may cover an opening of the case 200. The first cap plate 410 may include the first through hole H1. The first protrusion portion 322 may be inserted into the first through hole H1 formed in the first cap plate 410.

The first sealing member 420 may be joined to the first cap plate 410. The first sealing member 420 may seal between the first terminal plate 430 and the first cap plate 410. The first sealing member 420 may include an insulating material. The first cap plate 410 and the first terminal plate 430 may be insulated by the first sealing member 420.

The first terminal plate 430 may be joined on the first sealing member 420. The first terminal plate 430 may be connected to the first current collector 320. The first terminal plate 430 may be welded to the first protrusion portion 322 inserted into the first through hole H1 formed in the first cap plate 410.

The first terminal plate 430 may be electrically connected to the first electrode in the electrode assembly 100. The first terminal plate 430 may be connected to the first electrode through the first sub plate 310 and the first current collector 320 connected to the first electrode. The first terminal plate 430 may be the first electrode terminal of the secondary battery 10. For example, a busbar may be welded on the first terminal plate 430 so as to be electrically connected to another secondary battery 10.

In a case where the first sub plate assembly 300 and the first cap assembly 400 are joined to each other, the upper surface of the first protrusion portion 322 may come into contact with the first terminal plate 430. The first terminal plate 430 may cover the upper surface of the first protrusion portion 322. The first terminal plate 430 may completely cover the upper surface of the first protrusion portion 322. The first protrusion portion 322 and the first terminal plate 430 may be welded to each other. For example, a welding area may be formed on the upper surface of the first terminal plate 430. A welding process may be performed on the welding area so that the first terminal plate 430 and the first current collector 320 may be joined to each other. Accordingly, the first current collector 320 and the first terminal plate 430 may be electrically connected to each other. Welding beads or the like may be formed in the welding area due to the welding process.

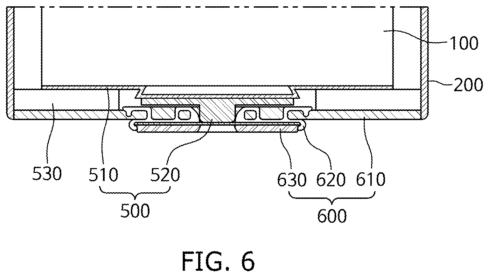

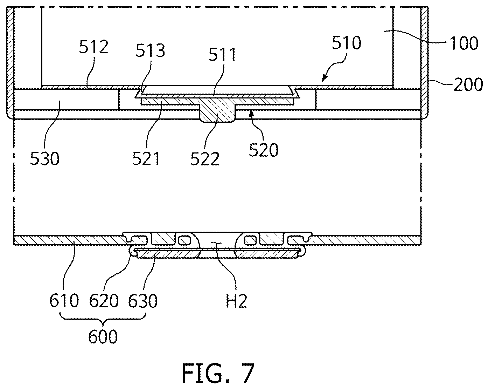

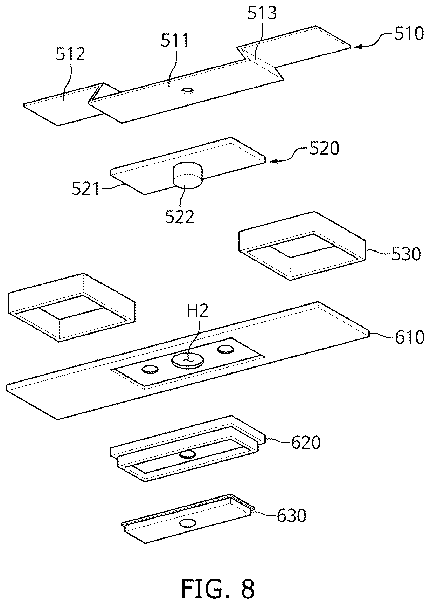

FIG. 6 illustrates an enlarged view showing a region R2 of FIG. 2. FIG. 7 illustrates a state in which a second sub plate assembly 500 and a second cap assembly 600 of FIG. 6 are separated from each other. FIG. 8 illustrates a perspective view showing a state in which the second sub plate assembly 500, the second cap assembly 600, and the second insulating member 530 of FIG. 6 are separated from each other.

Referring to FIG. 6, the second sub plate assembly 500 and the second cap assembly 600 may be joined on the other side of the electrode assembly 100 (e.g., on a side opposite to the first sub plate assembly 400). The second insulating member 530 may be disposed between the second sub plate assembly 500 and the second cap assembly 600.

The second sub plate assembly 500 may be joined to the other side of the electrode assembly 100 and may be electrically connected to a second electrode (e.g., a negative electrode) of the electrode assembly 100. The second sub plate assembly 500 may include a second sub plate 510 and a second current collector 520.

The second sub plate 510 may be joined to the second electrode tab of the electrode assembly 100. For example, the second electrode tab may be welded to the second sub plate 510. The second sub plate 510 may be connected to the second electrode tab and electrically connected to the second electrode.

The second current collector 520 may be joined to the second sub plate 510. For example, the second current collector 520 and the second sub plate 510 may be welded together. The second current collector 520 may be electrically connected to the second sub plate 510.

The second current collector 520 may be connected to the second cap assembly 600. For example, the second current collector 520 may be welded to the second cap assembly 600.

The second insulating member 530 may be disposed between the second sub plate assembly 500 and the second cap assembly 600. The second insulating member 530 may prevent the second sub plate 510 and the second cap plate 610 from coming into contact with each other.

The second insulating member 530 may have elasticity. For example, in a case where the secondary battery 10 receives an external impact, the second insulating member 530 may have elasticity and alleviate impact. The second insulating member 530 may alleviate impact, thereby maintaining the welded connection state between a third flat portion 511 of the second sub plate 510 and the second current collector 520 and the welded connection state between a fourth flat portion 512 of the second sub plate 510 and the electrode assembly 100. In some embodiments, the second insulating member 530 may alleviate impact and prevent the electrode assembly 100 from being damaged.

Referring to FIGS. 7 and 8, the second sub plate 510 may include a third flat portion 511, a fourth flat portion 512, and a third elastic portion 513. For example, the second sub plate 510 may have a substantially same structure as the first sub plate 310, and may be configured as a mirror image of the first sub plate 310 with respect to a line along the X-axis crossing a center of the secondary battery 10.

The second current collector 520 may be connected to the third flat portion 511. For example, a second bottom portion 521 may be welded to the upper side of the third flat portion 511.

The fourth flat portion 512 may have a step with respect to the third flat portion 511 and may extend parallel from opposite sides of the third flat portion 511. The fourth flat portion 512 may have a structure that is symmetrical on opposite sides from the center of the third flat portion 511. For example, the fourth flat portion 512 may have a step upward from the third flat portion 511 and may extend parallel to opposite sides of the third flat portion 511. The electrode assembly 100 may be connected to one surface of the fourth flat portion 512. A second insulating member 530 may be disposed on the other surface of the fourth flat portion 512. For example, the second electrode tab may be welded to the upper surface of the fourth flat portion 512, and the second insulating member 530 may be disposed on the lower surface of the fourth flat portion 512.

The third elastic portion 513 may connect the third flat portion 511 and the fourth flat portion 512. The third elastic portion 513 may have a structure that is symmetrical on opposite sides from the center of the third flat portion 511. For example, the third elastic portion 513 may extend upward from one end of the third flat portion 511 and may be connected to the fourth flat portion 512. The third elastic portion 513 may extend upward from the other end of the third flat portion 511 and may be connected to the fourth flat portion 512.

The upper side and the lower side are for convenience of explanation based on the secondary battery 10 illustrated in FIG. 7, and the positions thereof may change in a case where the secondary battery 10 rotates left and right or up and down.

The third elastic portion 513 may have elasticity. For example, in a case where the secondary battery 10 receives an external impact, the third elastic portion 513 may alleviate impact by moving linearly or twisting between the third flat portion 511 and the fourth flat portion 512. The third elastic portion 513 may alleviate impact, thereby maintaining the welded connection state between the third flat portion 511 and the second current collector 520 and the welded connection state between the fourth flat portion 512 and the electrode assembly 100. In some embodiments, the third elastic portion 513 may alleviate impact and prevent the electrode assembly 100 from being damaged.

The second current collector 520 may include a second bottom portion 521 and a second protrusion portion 522. The second bottom portion 521 may be welded to the third flat portion 511. The second protrusion portion 522 may protrude on the second bottom portion 521. The second protrusion portion 522 may be formed in a cylindrical shape. The second protrusion portion 522 may be inserted into a second through hole formed in the second cap plate 610 and connected to the second terminal plate 630.

The second cap assembly 600 may include the second cap plate 610, the second sealing member 620, and the second terminal plate 630.

The second cap plate 610 may be welded to the case 200. The second cap plate 610 may cover the other opening of the case 200. The second cap plate 610 may include a second through hole H2. The second protrusion portion 522 may be inserted into the second through hole H2 formed in the second cap plate 610.

The second sealing member 620 may be joined to the second cap plate 610. The second sealing member 620 may seal between the second terminal plate 630 and the second cap plate 610. The second sealing member 620 may include an insulating material. The second cap plate 610 and the second terminal plate 630 may be insulated by the second sealing member 620.

The second terminal plate 630 may be joined on the second sealing member 620. The second terminal plate 630 may be connected to the second current collector 520. The second terminal plate 630 may be welded to the second protrusion portion 522 inserted into the second through hole H2 formed in the second cap plate 610.

The second terminal plate 630 may be electrically connected to the second electrode. The second terminal plate 630 may be connected to the second electrode through the second sub plate 510 and the second current collector 520 connected to the second electrode. The second terminal plate 630 may be the second electrode terminal of the secondary battery 10. For example, a busbar may be welded on the second terminal plate 630 so as to be electrically connected to another secondary battery 10.

In a case where the second sub plate assembly 500 and the second cap assembly 600 are joined to each other, the upper surface of the second protrusion portion 522 may come into contact with the second terminal plate 630. The second terminal plate 630 may cover the upper surface of the second protrusion portion 522. The second terminal plate 630 may completely cover the upper surface of the second protrusion portion 522. The second protrusion portion 522 and the second terminal plate 630 may be welded to each other. For example, a welding area may be formed on the upper surface of the second terminal plate 630. A welding process may be performed on the welding area so that the second terminal plate 630 and the second current collector 520 may be joined to each other. Accordingly, the second current collector 520 and the second terminal plate 630 may be electrically connected to each other. Welding beads or the like may be formed in the welding area due to the welding process.

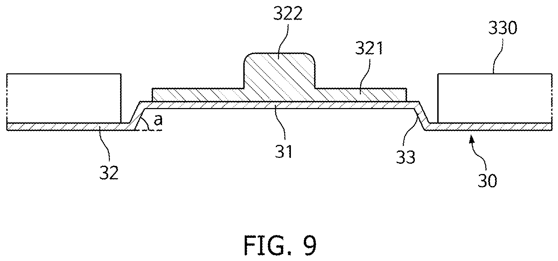

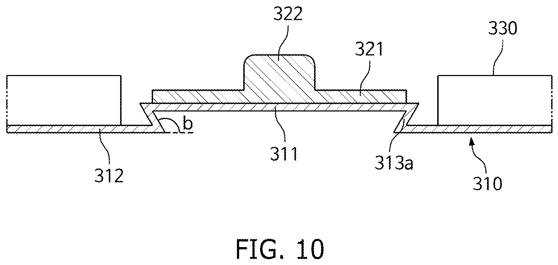

FIG. 9 illustrates a diagram showing a comparative example of a first sub plate 30, a first current collector, and a first insulating member 330. FIGS. 10 to 19 illustrate a first sub plate, a first current collector, and a first insulating member according to an embodiment of the present disclosure.

Referring to FIG. 9, a first sub plate 30 of a comparative example may include a first flat portion 31, a second flat portion 32, and a support portion 33. The first flat portion 31 may have one surface connected to a first current collector. The second flat portion 32 may have one surface connected to an electrode assembly (see 100 of FIG. 3) and the other surface on which a first insulating member 330 is disposed. The second flat portion 32 may have a step with respect to the first flat portion 31 and may extend parallel from opposite sides of the first flat portion 31. The second flat portion 32 may have a structure that is symmetrical with respect to the first flat portion 31.

The support portion 33 may connect the first flat portion 31 and the second flat portion 32. The support portion 33 may have a straight structure (e.g., a rigid structure without elasticity). The support portion 33 may be inclined in the inward direction of the first flat portion 31 from the second flat portion 32, e.g., the first and second flat portions 31 and 32 may not overlap in the vertical direction (in the Z-axis direction). For example, an angle a formed by an imaginary straight line extending from the support portion 33 and the second flat portion 32 may form an acute angle.

As described above, the first sub plate 30 of the comparative example does not have a structure in which the support portion 33 has elasticity. Accordingly, in a case where the secondary battery 10 were to receive an external impact, the welded connection state between the first flat portion 31 and the first current collector and/or the welded connection state between the second flat portion 32 and the electrode assembly 100 may be damaged. In some embodiments, the electrode assembly 100 may be damaged by the external impact.

Hereinafter, the first sub plate 310 of the present disclosure is described in comparison with FIG. 9. The first sub plate 310 of the present disclosure illustrated in FIGS. 10 to 19 may include a structure having elasticity. The description of the first sub plate 310 may also be applied to the second sub plate 510.

Referring to FIG. 10 in comparison with FIG. 9, the first sub plate 310 according to an embodiment of the present disclosure may include the first flat portion 311, the second flat portion 312, and a first elastic portion 313a.

The first current collector 320 may be connected to the first flat portion 311. For example, the first bottom portion 321 may be welded to the upper side of the first flat portion 311.

The second flat portion 312 may have a step with respect to the first flat portion 311 and may extend parallel from opposite sides of the first flat portion 311. The second flat portion 312 may have a structure that is symmetrical on opposite sides from the center of the first flat portion 311. For example, the second flat portion 312 may have a step downward from the first flat portion 311 and may extend parallel to opposite sides of the first flat portion 311. The electrode assembly 100 may be connected to one surface of the second flat portion 312. The first insulating member 330 may be disposed on the other surface of the second flat portion 312 facing one surface of the second flat portion 312.

The first elastic portion 313a may connect the first flat portion 311 and the second flat portion 312. The first elastic portion 313a may have a structure that is symmetrical on opposite sides from the center of the first flat portion 311. For example, the first elastic portion 313a may extend downward from one end of the first flat portion 311 and may be connected to the first flat portion 311. For example, the first elastic portion 313a may extend downward from the other end of the first flat portion 311 and may be connected to the first flat portion 311.

The first elastic portion 313a may extend to be bent (e.g., at an oblique angle) from each end of the first flat portion 311 to one end of the second flat portion 312. The first elastic portion 313a may be bent in the inward direction of the first flat portion 311, e.g., so the first and second flat portions 311 and 312 may vertically overlap each other. The first elastic portion 313a may be pressed and may alleviate external impact. For example, the first elastic portion 313a may be bent inward so that an angle b formed by an imaginary straight line extending from the first elastic portion 313a and the second flat portion 312 forms an obtuse angle.

The first elastic portion 313a may alleviate external impact, thereby maintaining the welded connection state between the first flat portion 311 and the first current collector 320 and the welded connection state between the second flat portion 312 and the electrode assembly 100. In some embodiments, the first elastic portion 313a may alleviate impact and prevent the electrode assembly 100 from being damaged.

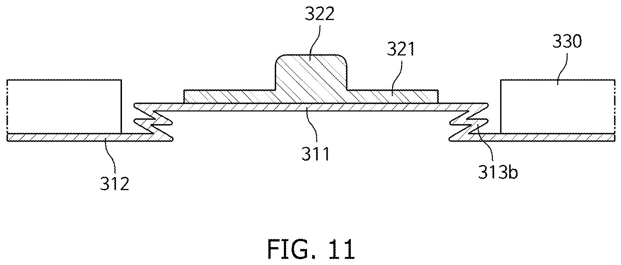

Referring to FIG. 11 in comparison with FIG. 10, a first elastic portion 313b illustrated in FIG. 11 may be bent multiple times alternately in the inward and outward directions (e.g., in a zigzag shape) of the first flat portion 311 at opposite ends of the first flat portion 311. The first elastic portion 313b may be connected by being bent multiple times alternately in the inward and outward directions of (e.g., toward and away from) the first flat portion 311 between the first flat portion 311 and the second flat portion 312. The first elastic portion 313b illustrated in FIG. 11 may have a more bent structure and increase elasticity than the first elastic portion 313a illustrated in FIG. 10.

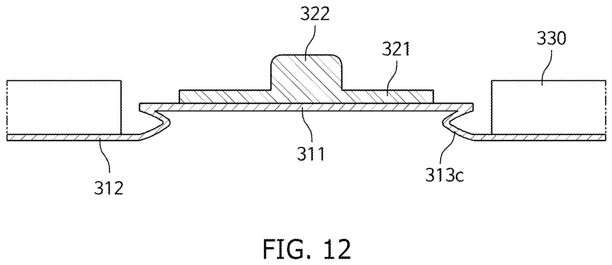

Referring to FIG. 12 in comparison with FIG. 10, a first elastic portion 313c illustrated in FIG. 12 may be bent curvedly in the inward direction of the first flat portion 311 at opposite ends of the first flat portion 311. The first elastic portion 313c may be connected by being bent in the inward direction of the first flat portion 311 between the first flat portion 311 and the second flat portion 312. As another example, the first elastic portion 313c may be bent in the outward direction of the first flat portion 311 at opposite ends of the first flat portion 311. The first elastic portion 313c may be pressed and alleviate external impact.

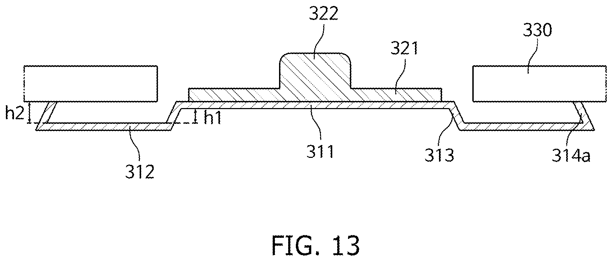

Referring to FIG. 13 in comparison with FIGS. 9 and 10, the first sub plate 310 according to an embodiment of the present disclosure may further include a second elastic portion 314a. For example, the second elastic portion 314a may extend from an outermost edge of the second flat portion 312 in a direction oriented toward the first current collector.

The second elastic portion 314a may extend to be bent from one end of the second flat portion 312 in a direction in which the first insulating member 330 is disposed. A height h2 to which the second elastic portion 314a extends (e.g., a distance between facing surfaces of the second flat portion 312 and the first insulating member 330) may be equal to or different from a height h1 between the first flat portion 311 and the second flat portion 312 (e.g., a distance between facing surfaces of the first and second flat portions 311 and 312). The height h2 to which the second elastic portion 314a extends may vary depending on the thickness of the first insulating member 330.

The second elastic portion 314a may have elasticity. The second elastic portion 314a may be bent in the inward direction of the second flat portion 312 (e.g., toward the first current collector). The second elastic portion 314a may be pressed and alleviate external impact.

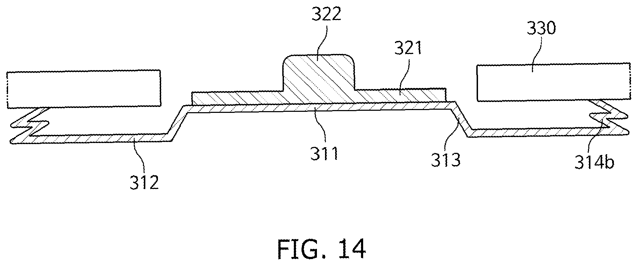

Referring to FIG. 14 in comparison with FIG. 13, the second elastic portion 314b illustrated in FIG. 14 may extend to be bent multiple times alternately in the inward and outward directions of the second flat portion 312 (e.g., in a zigzag shape). The second elastic portion 314b illustrated in FIG. 14 may have a more bent structure and increased elasticity than the second elastic portion 314a illustrated in FIG. 13.

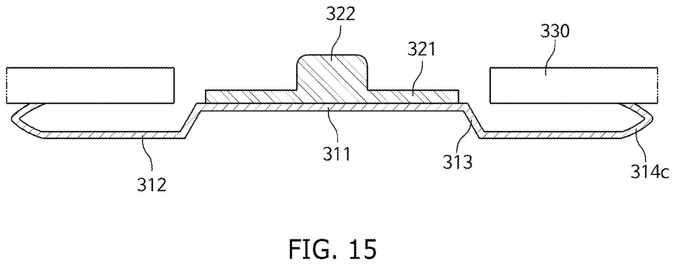

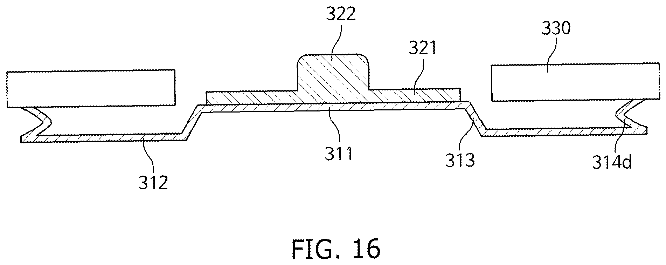

Referring to FIGS. 15 and 16 in comparison with FIG. 13, the second elastic portion 314c illustrated in FIG. 15 may extend to be bent curvedly in the outward direction of (e.g., away from) the second flat portion 312. The second elastic portion 314d illustrated in FIG. 16 may extend to be bent curvedly in the inward direction of (e.g., toward) the second flat portion 312. The second elastic portions 314c and 314d may be pressed and alleviate external impact.

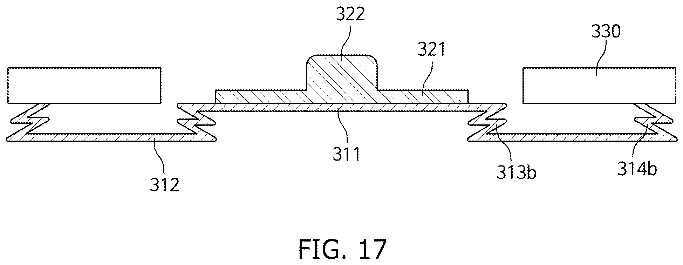

Referring to FIG. 17 in comparison with FIG. 11 and FIG. 14, the first elastic portion 313b illustrated in FIG. 17 may have the same structure as the first elastic portion 313b illustrated in FIG. 11. The first elastic portion 313b may be bent multiple times alternately in the inward and outward directions of the first flat portion 311 at opposite ends of the first flat portion 311. The second elastic portion 314b illustrated in FIG. 17 may have the same structure as the second elastic portion 314b illustrated in FIG. 14. The second elastic portion 314b may extend to be bent multiple times alternately in the inward and outward directions of the second flat portion 312. The first elastic portion 313b and the second elastic portion 314b may be pressed and alleviate external impact.

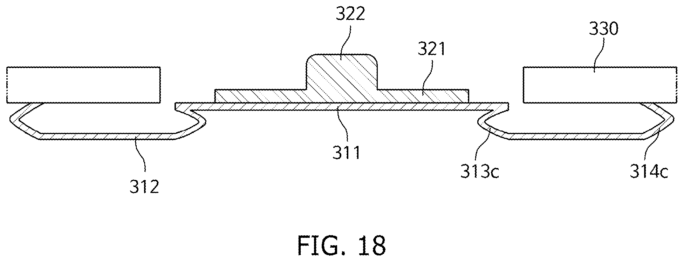

Referring to FIG. 18 in comparison with FIG. 12 and FIG. 15, the first elastic portion 313c illustrated in FIG. 18 may have the same structure as the first elastic portion 313c illustrated in FIG. 12. The first elastic portion 313c may be bent curvedly in the inward direction of the first flat portion 311 at opposite ends of the first flat portion 311. The second elastic portion 314c illustrated in FIG. 18 may have the same structure as the second elastic portion 314c illustrated in FIG. 15. The second elastic portion 314c may extend to be bent curvedly in the outward direction of the second flat portion 312. The first elastic portion 313c and the second elastic portion 314c may be pressed and alleviate external impact.

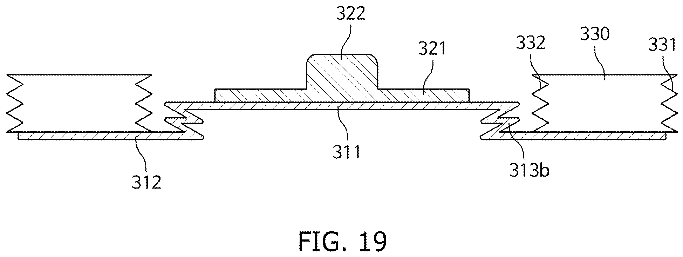

Referring to FIG. 19 in comparison with FIG. 11, the first insulating member 330 according to an embodiment of the present disclosure may have elasticity. The first insulating member 330 may include an elastic material. For example, in a case where the secondary battery 10 receives external impact, the first insulating member 330 may include an elastic material to alleviate external impact.

The first insulating member 330 may have elasticity by being bent multiple times in the inward and outward directions on opposite side surfaces 331 and 332 (e.g., lateral sides of the first insulating member 330 may have a zigzag-shaped cross-section). For example, in a case where the secondary battery 10 receives external impact, the first insulating member 330 may be pressed with elasticity and alleviate impact.

As described above, the second sub plate assembly 500 according to an embodiment of the present disclosure has the same symmetrical configuration structure as the first sub plate assembly 300, and the second insulating member 530 has the same structure as the first insulating member 330. Thus, a detailed description thereof is not repeated.

By way of summation and review, prismatic type secondary batteries may be classified into a bent type structure, in which the sub plate and a current collector are connected through a bent current collection tab, and a direct-connected type structure, in which the sub plate and a current collector are directly connected. In a case of an external impact on the secondary battery, while the bent current collection tab in the bent type structure may act as a buffer, the direct-connected type structure may be damaged by the external impact.

In contrast, aspects of embodiments of the present disclosure provide a sub plate and a secondary battery including the same that alleviate damage from an external impact. That is, according to some embodiments of the present disclosure, a sub plate having elasticity may be provided to alleviate impact that a secondary battery receives from the outside. According to some embodiments of the present disclosure, an insulating member having elasticity may be provided to alleviate impact that a secondary battery receives from the outside.

However, the technical problem to be solved by the present disclosure is not limited to the above problem, and other problems not mentioned herein, and aspects and features of the present disclosure that would address such problems, will be clearly understood by those skilled in the art from the description of the present disclosure, described above.

Although the present disclosure has been described above with respect to embodiments thereof, the present disclosure is not limited thereto. Various modifications and variations can be made thereto by those skilled in the art within the scope of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A sub plate (310), comprising:
a first flat portion (311) connectable to a current collector (320);
a second flat portion (312) having a step height difference with respect to the first flat portion (311), the second flat portion (312) being connectable to an electrode assembly (100); and
a first elastic portion (313) connecting the first flat portion (311) and the second flat portion (312), the first elastic portion (313) having elasticity.

2. The sub plate (310) as claimed in claim 1, wherein the first elastic portion (313) extends from one end of the first flat portion (311) to one end of the second flat portion (312), the first elastic portion (313) being bent with respect to each of the first flat portion (311) and the second flat portion (312).

3. The sub plate (310) as claimed in claim 2, wherein the first elastic portion (313a) is bent in an inward direction of the first flat portion (311).

4. The sub plate (310) as claimed in claim 2, wherein the first elastic portion (313b) is bent multiple times alternately in inward and outward directions of the first flat portion (311).

5. The sub plate (310) as claimed in claim 2, wherein the first elastic portion (313c) is bent curvedly in an inward direction of the first flat portion (311).

6. The sub plate (310) as claimed in claim 1, further comprising a second elastic portion (314a) extending from one end of the second flat portion (312) in a direction oriented toward an insulating member (330), the second elastic portion (314a) being bent with respect to the second flat portion (312) and having elasticity.

7. The sub plate (310) as claimed in claim 6, wherein the second elastic portion (314a) is bent in an inward direction of the second flat portion (312).

8. The sub plate (310) as claimed in claim 6, wherein the second elastic portion (314b) is bent multiple times alternately in inward and outward directions of the second flat portion (312).

9. The sub plate (310) as claimed in claim 6, wherein the second elastic portion (314c) is bent curvedly in an outward direction of the second flat portion (312).

10. The sub plate (310) as claimed in claim 6, wherein the second elastic portion (314d) is bent curvedly in an inward direction of the second flat portion (312).

11. The sub plate (310) as claimed in claim 6, wherein:
the first elastic portion (313b) is bent multiple times alternately in inward and outward directions of the first flat portion (311), and
the second elastic portion (314b) is bent multiple times alternately in inward and outward directions of the second flat portion (312).

12. The sub plate (310) as claimed in claim 6, wherein:
the first elastic portion (313c) is bent curvedly in an inward direction of the first flat portion (311); and
the second elastic portion (314c) is bent curvedly in an outward direction of the second flat portion (312).

13. A secondary battery (10), comprising:
an electrode assembly (100);
a case (200) accommodating the electrode assembly (100);
a sub plate assembly (300) including the sub plate (310) of any preceding claim connected to the electrode assembly (100) and a current collector (320) connected to the sub plate (310);
a cap assembly (400) connected to the sub plate assembly and joined to an opening of the case; and
an insulating member (330) between the sub plate assembly (300) and the cap assembly (400),
wherein:
the first flat portion (311) is connected to the current collector (320),
the second flat portion (312) is connected to the electrode assembly (100)..

14. The secondary battery (10) as claimed in claim 13, further comprising a second elastic portion (314a) extending from one end of the second flat portion (312) in a direction oriented toward the insulating member (330), the second elastic portion (314a) being bent with respect to the second flat portion (312) and having elasticity.

15. The secondary battery (10) as claimed in claim 13 or 14, wherein the insulating member (330) includes an elastic material.
